# EUROPEAN PATENT APPLICATION

(11) **EP 4 837 722 A1**
(43) Date of publication of application: **11.11.2026**
(21) Application number: 26165887.6
(22) Date of filing: 18.03.2026
(51) Int. Cl.: B29C 48/92, B29C 48/80

(54) **EXTRUDER**

(30) Priority: 21.03.2025 EP 25165263
(71) Applicant: Nouryon Chemicals International B.V., 1101 BZ Amsterdam (NL)
(72) Inventor: MAAN, Anna Maria Catharina, 1101 BZ Amsterdam (NL); FRIJLINK, Wilhelm Klaas, 1101 BX Amsterdam (NL); TEMPEL, Kasper Jakob, 1101 BZ Amsterdam (NL)
(74) Representative: Ingrassia, Fisher & Lorenz UK Ltd.

(57) **Abstract**

The present disclosure relates to an extruder for extruding a composition comprising polypropylene and an organic peroxide, and a process for extruding polypropylene.

## Description

### Technical Field

The present disclosure relates to an extruder for extruding a composition comprising polypropylene and an organic peroxide, and a process for extruding polypropylene using said extruder.

### Background

Processes for improving the physical properties of polypropylene, such as melt strength, using a peroxide are known in the art. The treatment with certain organic peroxide creates long chain branches. The more long chain branches, the higher the melt strength. High melt strength polypropylene (HMS-PP) finds use in food packaging and automotive applications.

WO 99/36466 and WO 2019/038244 disclose processes for increasing the melt strength of polypropylene. As noted in WO 2019/038244, using the specific peroxides disclosed therein resulted in higher melt strengths than the use of, e.g., dicetyl peroxydicarbonate, dibenzoylperoxide, and ortho-substituted dibenzoyl peroxide (as used in WO 99/36466). This improvement can be directly attributed to the use of those specific peroxides in combination with an inert atmosphere in the extruder.

Whilst the process of WO 2019/038244 does indeed produce polypropylene products with excellent melt strength properties, it is not always practical or desirable to use an inert environment in the extruder. For example, in polypropylene plastic recycling it is preferable if an inert environment can be avoided (to minimize the overall complexity and cost of the process). However, switching from an inert to a non-inert atmosphere in the extruder (i.e., air instead of an inert atmosphere) whilst using the organic peroxides of WO 2019/038244 produced a polypropylene product that was discoloured (i.e., yellowing instead of white), showed signs of degradation, and had inferior melt strength properties to those produced under an inert atmosphere, none of which are desirable outcomes.

The organic peroxide compositions provided in EP4421118 solved the issues identified for WO 2019/038244 - the peroxide compositions of EP4421118 successfully modified polypropylene under an air atmosphere, which in turn proved their usefulness in polypropylene recycling.

An issue that has been identified, however, is that on the standard extrusion apparatus used to recycle polypropylene, substantial amounts of the peroxide compositions provided in EP4421118 had to be used (ca. 2.5 wt.% granules; ca. 1.5 wt.% peroxide) in order to produce modified polypropylene with a desirable melt strength and melt flow index. This is potentially problematic for polypropylene recyclers, as the high peroxide dosing adds significant cost to the recycle process and reduces the "green" profile of the recycle process by consuming more materials. Furthermore, the standard extrusion apparatus used to recycle polypropylene requires a minimum extruder barrel temperature of 160°C, which has been found to accelerate degradation of the peroxide (perhaps explaining the need for significant quantities thereof to achieve suitable polypropylene modification), whilst also adding significant running cost to the recycle process and reducing the "green" profile of the recycle process by consuming more energy.

It was therefore an object of the present disclosure to find a way to reduce the amount of peroxide required to suitably modify polypropylene whilst also reducing the overall energy consumption of the process (primarily by reducing the temperature profile and increasing throughput).

### Summary

A complete solution to both problems has been found primarily by modifying the configuration of the extruder screw used in the polypropylene recycle extruder apparatus. Accordingly, the present disclosure may be summarized by the following Aspects:
**Aspect 1.** An extruder for extruding a composition comprising polypropylene and an organic peroxide, the extruder comprising:
   - a housing having a first end and a second end longitudinally opposite the first end, the housing having an inlet hopper proximate the first end, an outlet die at the second end, and an inlet zone within the housing, the inlet zone extending from the first end of the housing,
   - at least one extruder screw disposed within the housing, the at least one extruder screw having a length extending from the first end of the housing and configured to convey the composition from the inlet to the outlet die, and
   - a plurality of heating devices configured to generate a plurality of heating zones within the housing between the first end and the second end,

   wherein a first heating device is disposed adjacent to the inlet hopper and is configured to generate a first heating zone adjacent to the inlet zone, the first heating zone having a first temperature within the range of from about 110°C to less than 160°C,
   wherein the inlet zone and the first heating zone together extend from the first end of the housing to between 25-45% of the length of the at least one extruder screw, preferably from the first end of the housing to between 30-40% of the length of the at least one extruder screw,
   wherein said at least one extruder screw does not comprise a reverse screw element within the inlet zone and the first heating zone, and
   wherein the extruder is configured to have maximum internal pressure of 500 bar or less, preferably 450 bar or less, preferably 400 bar or less, preferably in the range of from about 1 to about 250 bar, such as from about 2 to about 200 bar or about 50 to about 150 bar.
**Aspect 2.** The extruder of Aspect 1, wherein the first temperature of the first heating zone is within the range of from about 115°C to about 150°C, preferably within the range of from about 120°C to about 140°C.
**Aspect 3.** The extruder of Aspects 1 or 2, further comprising:
   a second heating device disposed downstream of the first heating device, the second heating device being configured to generate a second heating zone adjacent to and downstream of the first heating zone and having a second temperature greater than the first temperature, preferably 5-40°C greater than the first temperature, preferably 10-30°C greater than the first temperature,
   a third heating device disposed downstream of the second heating device, the third heating device being configured to generate a third heating zone adjacent to and downstream of the second heating zone and having a third temperature greater than the second temperature, preferably 5-40°C greater than the second temperature, preferably 10-30°C greater than the second temperature,
   a fourth heating device disposed downstream of the third heating device, the fourth heating device being configured to generate a fourth heating zone adjacent to and downstream of the third heating zone and having a fourth temperature greater than the third temperature, preferably 5-40°C greater than the third temperature, preferably 5-30°C greater than the third temperature, preferably 5-20°C greater than the third temperature, and
   a fifth heating device disposed adjacent to and downstream of the fourth heating device, the fifth heating device being configured to generate a fifth heating zone adjacent to and downstream of the fourth heating zone and having a fifth temperature greater than the fourth temperature, preferably 5-40°C greater than the fourth temperature, preferably 5-30°C greater than the fourth temperature, preferably 5-20°C greater than the fourth temperature.
**Aspect 4.** The extruder of Aspect 3, wherein the inlet zone, the first heating zone, the second heating zone, and the third heating zone together extend from the first end of the housing to between 40-65% of the length of the at least one extruder screw, and wherein said at least one extruder screw does not comprise a reverse screw element within the inlet zone, the first heating zone, the second heating zone, and the third heating zone.
**Aspect 5.** The extruder of Aspects 3 or 4, wherein the at least one extruder screw does not comprises a kneading screw element in the inlet zone and first heating zone.
**Aspect 6.** The extruder of any one of Aspects 3-5, wherein the at least one extruder screw comprises at least one kneading screw element in the second heating zone and/or comprises at least one reverse screw element and/or at least one kneading screw element within the fourth heating zone.
**Aspect 7.** The extruder of any one of Aspects 1-6, wherein the outlet die comprises a heating device configured to heat the outlet die to a temperature equal to or greater than the temperature of the heating zone directly upstream of the outlet die.
**Aspect 8.** The extruder of any one of Aspects 1-7, wherein the at least one extruder screw comprises an assembly of individual screw elements detachably mounted on a screw rod.
**Aspect 9.** The extruder of any one of Aspects 1-8, wherein the extruder is a single screw extruder comprising one extruder screw or a twin-screw extruder comprising two extruder screws, preferably a twin-screw extruder comprising two extruder screws.
**Aspect 10.** The extruder of any one of Aspects 1-9, further comprising an extruder degassing system in fluid communication with the housing, the extruder degassing system comprising at least one vacuum pump.
**Aspect 11.** A process for extruding polypropylene comprising:
   a. feeding a polypropylene composition and an organic peroxide to an inlet zone of an extruder according to any one of Aspects 1-10,
   b. conveying and melting the composition in a first heating zone directly adjacent to the inlet zone, the first heating zone having a first temperature of from about 110°C to less than 160°C;
   c. mixing the composition in one or more heating zones downstream of said first heating zone; and
   d. obtaining an extruded polypropylene product from the outlet of the extruder;
   wherein the extruder has a maximum internal pressure of 500 bar or less, preferably 450 bar or less, preferably 400 bar or less, preferably in the range of from about 1 to about 250 bar, such as from about 2 to about 200 bar or about 50 to about 150 bar.
**Aspect 12.** The process of Aspect 11, wherein step c. comprises:
   c-i. mixing the composition in a second heating zone adjacent to and downstream of the first heating zone, the second heating zone having a second temperature greater than the first temperature, preferably 5-40°C greater than the first temperature,
   c-ii. mixing the composition in a third heating zone adjacent to and downstream of the second heating zone, the third heating zone having a third temperature greater than the second temperature, preferably 5-40°C greater than the second temperature,
   c-iii. mixing the composition in a fourth heating zone adjacent to and downstream of the third heating zone, the fourth heating zone having a fourth temperature greater than the third temperature, preferably 5-40°C greater than the third temperature, and
   c-iv. mixing the composition in a fifth heating zone adjacent to and downstream of the fourth heating zone, the fifth heating zone having a fifth temperature greater than the fourth temperature, preferably 5-40°C greater than the fourth temperature.
**Aspect 13.** The process of Aspects 11 or 12, wherein the organic peroxide is at least one organic peroxide of the formula (I) 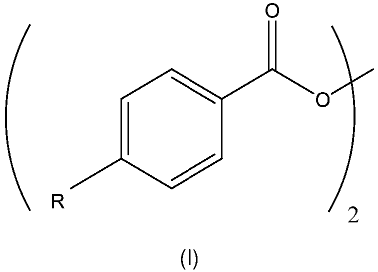 wherein each R is individually selected from C₁₋₅ alkyl groups, preferably wherein each R is individually selected from methyl, ethyl, n-propyl, i-propyl, n-butyl, sec-butyl, tert-butyl, and tert-amyl, most preferably wherein each R is methyl.
**Aspect 14.** The process of any one of Aspects 11-13, wherein the organic peroxide is an organic peroxide composition in solid form, the organic peroxide composition comprising:
   a) an organic peroxide of formula (I),
   b) at least one water retaining agent that is a solid at room temperature, and
   c) water.
**Aspect 15.** The process of Aspect 14, wherein the organic peroxide composition further comprises one or more stabilizers, wherein the one or more stabilizers preferably comprises or consists of one or more antioxidants.

### Figures

Figure 1 provides the results of reducing the residence time and temperature profile in the extruder for the standard extruder screw and the improved extruder screw of the present disclosure.
Figure 2 provides a schematic representation of an exemplary extruder in accordance with the present disclosure

### Detailed Description

Values or ranges may be expressed herein as "about", from "about" one particular value, and/or to "about" another particular value. When such values or ranges are expressed, other aspects disclosed include the specific value recited, from the one particular value, and/or to the other particular value. Similarly, when values are expressed as approximations, by use of the antecedent "about," it will be understood that the particular value forms another aspect. It will be further understood that there are a number of values disclosed therein, and that each value is also herein disclosed as "about" that particular value in addition to the value itself. In aspects, "about" can be used to mean, for example, within 10% of the recited value, within 5% of the recited value, or within 2% of the recited.

In a first aspect the present disclosure relates to an extruder for extruding a composition comprising polypropylene and an organic peroxide, the extruder comprising:
- a housing having a first end and a second end longitudinally opposite the first end, the housing having an inlet hopper proximate the first end, an outlet die at the second end, and an inlet zone within the housing, the inlet zone extending from the first end of the housing,
- at least one extruder screw disposed within the housing, the at least one extruder screw having a length extending from the first end of the housing and configured to convey the composition from the inlet zone to the outlet die, and
- a plurality of heating devices configured to generate a plurality of heating zones within the housing between the first end and the second end,

wherein a first heating device is disposed adjacent to the inlet hopper and is configured to generate a first heating zone adjacent to the inlet zone, the first heating zone having a first temperature within the range of from about 110°C to less than 160°C, preferably within the range of from about 115°C to about 150°C, preferably within the range of from about 120°C to about 140°C
wherein the inlet zone and the first heating zone together extend from the first end of the housing to between 25-45% of the length of the at least one extruder screw, preferably from the first end of the housing to between 30-40% of the length of the at least one extruder screw,
wherein said at least one extruder screw does not comprise a reverse screw element within the inlet zone and the first heating zone, and
wherein the extruder is configured to have maximum internal pressure of 500 bar or less, preferably 450 bar or less, preferably 400 bar or less, preferably in the range of from about 1 to about 250 bar, such as from about 2 to about 200 bar or about 50 to about 150 bar.

As shown in the worked examples that follow, the improved screw configuration in combination with the lower temperature profile provided the following benefits:
- Lower overall peroxide usage (30% lower peroxide consumption)
- Lower overall energy consumption
- Higher throughput (2x product output)
- Improved modified polypropylene product (increased melt strength, reduced melt flow index)

As noted above, organic peroxides create long chain branches in polypropylene. The more long chain branches, the higher the melt strength, with high melt strength polypropylene (HMS-PP) finding utility in numerous commercial applications, notably food packaging and automotive applications. Accordingly, an object of the present disclosure was to increase the melt strength of the polypropylene by introducing long chain branches within the extruder. It was found that long chain branch formation is promoted at an extruder internal pressure (i.e., the pressure inside the extruder housing, commonly referred to as the "melt pressure" or "die pressure") of 500 bar or less, preferably 450 bar or less, preferably 400 bar or less, preferably in the range of from about 1 to about 250 bar, such as from about 2 to about 200 bar or about 50 to about 150 bar. Pressure values described in this disclosure are expressed in bar, which refers specifically to gauge pressure (bar(g)) unless otherwise indicated. As used herein, 1 bar is defined as 100 kilopascals (kPa). The gauge pressure represents the pressure measured relative to the ambient atmospheric pressure at the time and location of measurement.

As used herein, the term "heating zone" has its ordinary meaning within the context of extruders, i.e., a region within the extruder housing that is set at a specific temperature. Where multiple heating zones are employed, each heating zone has a temperature distinct to another heating zone.

The term "adjacent to" as used herein means directly next to. For example, "a first heating zone adjacent to the inlet zone" means the first heating zone is directly next to the inlet zone, i.e., there are no zones disposed between the inlet zone and the first heating zone.

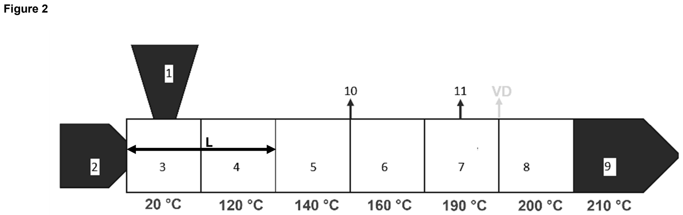

The extruder housing (more commonly referred to as the "extruder barrel") is of a typical configuration/design, with a hopper inlet proximate one end (to receive the material to be extruded) and an outlet die at the other end (from which the extruded material is obtained). A standard extruder housing (barrel) such as this is illustrated in the schematic of Figure 2.

For the avoidance of doubt, the term "wherein the X zone and Y zone together extend from the first end of the housing to between XX-XX% of the length of the at least one extruder screw" describes the extent to which the combined X zone and the Y zone extend within the extruder housing. For example, the term "wherein the inlet zone and the first heating zone together extend from the first end of the housing to between 25-40% of the length of the at least one extruder screw" means the inlet zone and first heating zone together account for an internal space within the extruder housing that extends from the first end of the extruder housing (i.e., the inlet end) to a point that is 25-45% of the length of the extruder screw. This is illustrated in Figure 2 by the double-headed arrow labelled "L", wherein in that exemplary embodiment the inlet zone and the first heating zone together extend from the first end of the housing to 35 % of the length of the at least one extruder screw (per the improved screw configuration of the worked examples, which said extruder screw extends from the inlet to the outlet). It is appreciated that a more commonly used metric for defining the size of zones within an extruder is based on the length to diameter ratio (L/D ratio) of the extruder, however for the purposes of the present disclosure, a % of the length of the extruder screw is considered a more concise and precise way to define the technical feature necessary to give rise to the technical improvements disclosed herein (as those technical improvements are not inextricably linked to any specific L/D ratio). Of course, L/D ratio can be easily converted to a % of the length of the extruder screw for any given extruder screw. For example, if the extruder of Figure 2 had a total L/D of 40 and an inlet zone with an L/D of 10, then that would correspond to an inlet zone that extends from the first end of the housing to 25% of the length of the extruder screw. Preferred extruders of the present disclosure have a total L/D of between 20 and 60, preferably between 30 and 50, preferably 35-45.

A first key modification leading to the extruder disclosed herein was the removal of the reverse screw element(s) in the first mixing zone (i.e., the extruder did not comprise a reverse screw element within the inlet zone and the first heating zone). A "reverse screw element" (also known as a "reverse-feed screw element") is a well-understood component of extruder screws that creates backflow within the extruder to enhance mixing and dispersion; they are designed with a reverse pitch to counter the forward flow of material within the extruder. This modification of the extruder screw allowed for the residence time of the polypropylene (PP) within the extruder to be substantially reduced, thereby allowing for a higher throughput to be reached whilst the minimizing PP degradation. In addition, the at least one extruder screw preferably does not comprises a kneading screw element in the inlet zone and first heating zone. A "kneading screw element" is designed to mix and knead the material thoroughly; they usually have a shallower flight depth and higher pitch compared to conveying elements, allowing for better mixing and higher shear. Removing the kneading screw element from the inlet zone and first heating zone has the effect of extending the feeding zone, which in turn allows for the use of lower temperature profile within the extruder barrel (housing), and consequently allows for the PP and the peroxide to be mixed and melted more gradually, thereby preventing the peroxide from decomposing too early and quickly at the start.

The extruder screw may be monolithic or it may be produced from multiple distinct components. In a preferred embodiment, the at least one extruder screw comprises or consist of an assembly of individual screw elements detachably mounted on a screw rod. In that respect, the extruder screw is essentially of a modular design, in that multiple different screw configurations may be obtained by rearrangement of the modular screw elements. As explained in the worked examples that follow, such a modular design facilitates quick and easy cleaning and/or reconfiguration of the extruder screw.

In a preferred embodiment, the extruder further comprises:
a second heating device disposed downstream of the first heating device, the second heating device being configured to generate a second heating zone adjacent to and downstream of the first heating zone and having a second temperature greater than the first temperature, preferably 5-40°C greater than the first temperature, preferably 10-30°C greater than the first temperature,
a third heating device disposed downstream of the second heating device, the third heating device being configured to generate a third heating zone adjacent to and downstream of the second heating zone and having a third temperature greater than the second temperature, preferably 5-40°C greater than the second temperature, preferably 10-30°C greater than the second temperature,
a fourth heating device disposed downstream of the third heating device, the fourth heating device being configured to generate a fourth heating zone adjacent to and downstream of the third heating zone and having a fourth temperature greater than the third temperature, preferably 5-40°C greater than the third temperature, preferably 5-30°C greater than the third temperature, and
a fifth heating device disposed adjacent to and downstream of the fourth heating device, the fifth heating device being configured to generate a fifth heating zone adjacent to and downstream of the fourth heating zone and having a fifth temperature greater than the fourth temperature, preferably 10-40°C greater than the fourth temperature, preferably 10-30°C greater than the fourth temperature.

In this embodiment, it is preferable for the inlet zone, the first heating zone, the second heating zone, and the third heating zone to together extend from the first end of the housing to between 60-75% of the length of the at least one extruder screw, wherein said at least one extruder screw does not comprise a reverse screw element within the inlet zone, the first heating zone, the second heating zone, and the third heating zone. Additionally, it is preferable for the at least one extruder screw to comprise at least one kneading screw element in the second heating zone and/or comprise at least one reverse screw element and/or at least one kneading screw element within the fourth heating zone.

Regarding the plurality of heating devices, these may be, but are not limited to, electrical heating devices, such as resistance coils, bands, or cuffs that are strapped or bolted around the extruder barrel. Upon demand, initiated by a thermocouple, electrical current is passed through the resistance wire, inside the coil. The resistance produces heat that causes the temperature to rise. If a proportional-integral-derivative controller (PID controller) is used, as the set point temperature is approached the power is progressively reduced and then finally turned off completely at the set point. As it can be very easy to exceed the extrusion set point temperature, the extruder disclosed herein may also be equipped with one or more cooling systems, such as, but not limited to, air cooling systems and liquid cooling systems. Air cooling systems are the simplest to install and consist of fans that circulate air around the barrel on demand. These are not as efficient as liquid cooling systems, such as, but not limited to, a closed loop, heat exchanger that uses distilled water contained inside a sealed coil surrounding the barrel. When the set point is exceeded, the vapor from this water is cooled by water flow so that the distilled water vapor condenses to absorb more heat.

It is preferable for the outlet die to comprise a heating device configured to heat the outlet die to a temperature equal to or greater than the temperature of the heating zone directly upstream of the outlet die. For example, in the preferred embodiment described above, the outlet die to comprises a heating device configured to heat the outlet die to a temperature equal to or greater than the temperature of the fifth heating zone that is directly upstream of the outlet die.

In a preferred embodiment, the extruder is a twin-screw extruder. Accordingly, in a preferred embodiment, the present disclosure relates to an extruder for extruding a composition comprising polypropylene and an organic peroxide, the extruder comprising:
- a housing having a first end and a second end longitudinally opposite the first end, the housing having an inlet hopper proximate the first end, an outlet die at the second end, and an inlet zone within the housing and extending from the first end of the housing,
- two extruder screws disposed within the housing, the extruder screws having a length extending from the first end of the housing and configured to convey the composition from the inlet to the outlet die, and
- a plurality of heating devices configured to generate a plurality of heating zones within the housing between the first end and the second end,

wherein a first heating device is disposed adjacent to the inlet hopper and is configured to generate a first heating zone adjacent to the inlet zone, the first heating zone having a first temperature within the range of from about 110°C to less than 160°C, preferably within the range of from about 115°C to about 150°C, preferably within the range of from about 120°C to about 140°C
wherein the inlet zone and the first heating zone together extend from the first end of the housing to between 25-45% of the length of the extruder screws, preferably from the first end of the housing to between 30-40% of the length of the extruder screws,
wherein said extruder screws do not comprise a reverse screw element within the inlet zone and the first heating zone, and
wherein the extruder is configured to have maximum internal pressure of 500 bar or less, preferably 450 bar or less, preferably 400 bar or less, preferably in the range of from about 1 to about 250 bar, such as from about 2 to about 200 bar or about 50 to about 150 bar.

It is preferable for the twin-screw extruder to comprise a second to fifth heating zone as defined above.

Figure 2 provides a schematic representation of an exemplary extruder in accordance with the present disclosure. It should be understood that the schematic is for illustrative purposes only and does not set out every component of the extruder in detail. The extruder comprises an inlet hopper **1,** a motor **2** (for driving the extruder screw, not shown), an outlet die **9,** an inlet zone **3** (water-cooled to a temperature of 20°C), and a first heating zone **4** adjacent the inlet zone **3,** the first heating zone **4** set at a temperature of 120°C. A second heating zone **5** adjacent to and downstream of the first heating zone **4** is set at a temperature of 140°C. A third heating zone **6** adjacent to and downstream of the second heating zone **5** is set at a temperature of 160°C. A fourth heating zone **7** adjacent to and downstream of the third heating zone **6** is set at a temperature of 190°C. A fifth heating zone **8** adjacent to and downstream of the fourth heating zone **7** is set at a temperature of 200°C. Finally, the outlet die **9** comprises a heating device that heats the die to a temperature of 210°C. At the end of second heating zone **5** the extruder screw (not shown) comprises one or more kneading elements **10** to generate high shear mixing at the end of the second heating zone. The fourth heating zone **7** comprises a reverse screw element **11** which functions as a melt seal that is required for proper vacuum degassing **(VD)** and further comprises kneading elements to generate high shear mixing in the fourth heating zone. The specifics of the configuration of an exemplary screw configuration (not shown in Figure 2) are provided in the worked examples that follow. As noted above, the double-headed arrow labelled "L" indicates that the inlet zone and the first heating zone together extend from the first end of the housing to 35 % of the length of the at least one extruder screw (per the improved screw configuration of the worked examples, which said extruder screw extends from the inlet to the outlet).

In a second aspect, the present disclosure relates to a process for extruding polypropylene comprising:
a. feeding a polypropylene composition and an organic peroxide to an inlet zone of an extruder according to the first aspect described above,
b. mixing the composition in a first heating zone directly adjacent to the inlet zone, the first heating zone having a first temperature of from about 110°C to less than 160°C;
c. mixing the composition in one or more heating zones downstream of said first heating zone; and
d. obtaining an extruded polypropylene product from the outlet of the extruder;
wherein the extruder has a maximum internal pressure of 500 bar or less, preferably 450 bar or less, preferably 400 bar or less, preferably in the range of from about 1 to about 250 bar, such as from about 2 to about 200 bar or about 50 to about 150 bar.

Preferably, step c. comprises:
c-i. mixing the composition in a second heating zone adjacent to and downstream of the first heating zone, the second heating zone having a second temperature greater than the first temperature, preferably 10-40°C greater than the first temperature, preferably 10-30°C greater than the first temperature,
c-ii. mixing the composition in a third heating zone adjacent to and downstream of the second heating zone, the third heating zone having a third temperature greater than the second temperature, preferably 10-40°C greater than the second temperature, preferably 10-30°C greater than the second temperature,
c-iii. mixing the composition in a fourth heating zone adjacent to and downstream of the third heating zone, the fourth heating zone having a fourth temperature greater than the third temperature, preferably 10-40°C greater than the third temperature, preferably 10-30°C greater than the third temperature, and
c-iv. mixing the composition in a fifth heating zone adjacent to and downstream of the fourth heating zone, the fifth heating zone having a fifth temperature greater than the fourth temperature, preferably 10-40°C greater than the fourth temperature, preferably 10-30°C greater than the fourth temperature.

In a preferred embodiment:
- the inlet zone extends from the first end of the housing to between 5-15% of the length of the at least one extruder screw
- the inlet zone and the first heating zone together extend from the first end of the housing to between 25-45% of the length of the at least one extruder screw
- the inlet zone, the first heating zone and the second heating zone together extend from the first end of the housing to between 35-65% of the length of the at least one extruder screw
- the inlet zone, the first heating zone, the second heating zone and the third heating zone together extend from the first end of the housing to between 60-75% of the length of the at least one extruder screw
- the inlet zone, the first heating zone, the second heating zone, the third heating zone and the fourth heating zone together extend from the first end of the housing to between 70-85% of the length of the at least one extruder screw
- the inlet zone, the first heating zone, the second heating zone, the third heating zone, the fourth heating zone and the fifth heating zone together extend from the first end of the housing to between 85-100% of the length of the at least one extruder screw.

The organic peroxide used in the process and apparatus disclosed herein is preferably those disclosed in EP4421118, which is hereby incorporated by reference. In that respect, it is preferable to use an organic peroxide composition that is in solid form (preferably in the form of compacted solid articles, such as flakes or granules) and which comprises:
a) at least one organic peroxide of the formula 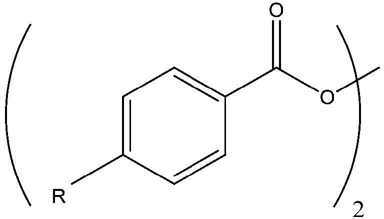 wherein each R is individually selected from C₁₋₅ alkyl groups;
b) at least one water retaining agent that is a solid at room temperature; and
c) water.

There are many suitable solid forms for the organic peroxide composition, such as, but not necessarily limited to, powders (e.g., blend of powdered ingredients, typically mixed in a conical screw mixer, or a ploughshare mixer), granules, flakes, etc. Preferably, the organic peroxide composition is compacted (and optionally shaped) into solid articles, such as flakes or granules, as the compacted solid articles (such as flakes and granules) have been found to be chemically stable and easier to dose than uncompacted powders, hence much safer and easier to add to the extruder. Using compacted (and optionally shaped) solid articles (e.g., flakes or granules) instead of an uncompacted powdered blend of components also results in a lower MFI. Persons skilled in the art know how to prepare compacted (and optionally shaped) solid articles and are aware of suitable and readily available apparatus for preparing compacted (and optionally shaped) solid articles (e.g., Amandus Kahl pellet mill, Bepex gear pelletizer, etc.).

Component a) is at least one organic peroxide selected from those of the formula 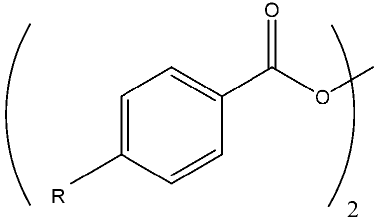 wherein each R is located at the para-position of the aromatic ring and is individually selected from C₁₋₅ alkyl groups.

In a preferred embodiment, each R is individually selected from C₁₋₅ alkyl groups. Examples of such groups are methyl, ethyl, n- propyl, i-propyl, n-butyl, sec-butyl, tert-butyl, and tert-amyl.

More preferably, at least one R is methyl.

Most preferably, the organic peroxide is di(para-methylbenzoyl) peroxide (i.e., each R is methyl).

Preferably, the organic peroxide composition comprises from 40-75 wt.%, preferably from 45-70 wt.%, more preferably from 50-65 wt.% of the at least one organic peroxide as described above (wt.% based on the total weight of the organic peroxide composition).

Component b) is at least one water retaining agent that is a solid at room temperature. The term "water retaining agent" has its ordinary meaning, which (in this technical context) means an agent that causes water to be retained in the organic peroxide composition (e.g., via absorption or adsorption of free water in the composition by the "water retaining agent"), particularly when subjected to compressive forces (i.e., minimize water loss when the composition is compressed). The test for determining whether an agent is a particularly suitable "water retaining agent" is set out in worked example 5 of EP4421118 ("Protocol A"), which said test is hereby incorporated by reference. "Solid at room temperature" has its ordinary meaning, i.e., a solid at 25°C and 1 atmosphere. Retaining water in the solid organic peroxide composition is critical to successfully producing a polypropylene product by extrusion under a non-inert atmosphere with the same desirable technical properties of the polypropylene products produced by the process of WO 2019/038244. Water retaining agents suitable for use in chemical compositions are known and readily available to the skilled person. Examples of suitable water retaining agents according to the present disclosure include, but are not necessarily limited to:
- anionic clays, such as, but not limited to, synthetic and natural layered double hydroxides including, but not limited to, natural and synthetic hydrotalcites;
- water absorbing polymers, such as, but not limited to, acrylic-based water absorbing polymers (e.g. poly(meth)acrylic acids, polyacrylamides, etc.), polyvinylalcohol-based water absorbing polymers, polyethylene glycol-based water absorbing polymers, polysaccharide-based water absorbing polymers (e.g., water absorbing polymers based native or modified starch, native or modified cellulose [notably carboxymethyl celluloses], native or modified cyclodextrins, native or modified guar gums, etc.), polyamide-based water absorbing polymers (e.g., polyaspartic acid);
- metal carbonates and metal bicarbonates, such as, but not limited to, Ca, Mg, Zn, Na, K, or Li carbonate, or Na, K, or Li bicarbonate;
- metal oxides, such as, but not limited to, CaO, MgO, and ZnO;
- metal silicates, such as, but not limited to, calcium silicate or magnesium silicate;
- metal phosphates, such as, but not limited to, dicalcium phosphate;
- hydrophilic silicas; and
- metal sulfate drying agents, such as, but not limited to, sodium sulfate, barium sulfate, and magnesium sulfate.

Preferred water retaining agents comprise or consist of at least one anionic clay. Anionic clays have a crystal structure comprising positively charged layers built up of combinations of divalent and trivalent metal hydroxides between which there are anions and water molecules. Hydrotalcite is an example of a naturally occurring anionic clay, in which carbonate is the predominant anion and the layers contain Mg and Al. Various natural, synthetic, and modified forms with other di- and/or trivalent metals and/or anions (including nitrate anions, organic anions and pillaring anions) are known and suitable for use in the compositions disclosed herein. Preferred anionic clays are anionic clays with carbonate or hydroxide anions in the interlayers. It has been found that the anionic clays are particularly effective in the presently disclosed compositions, such as the naturally occurring and synthetic hydrotalcites, for example aluminum magnesium hydroxide carbonate.

Preferably, the organic peroxide composition comprises from 1-30 wt.%, preferably from 3-20 wt.%, more preferably from 5-15 wt.% of the at least one water retaining agent (wt.% based on the total weight of the organic peroxide composition).

Component c) is water. Preferably, the organic peroxide composition comprises from 5-30 wt.%, preferably from 10-25 wt.%, more preferably from 15-20 wt.% water (wt.% based on the total weight of the organic peroxide composition).

Other additives conventionally used in organic peroxide compositions may also be included in the organic peroxide composition disclosed herein. These conventional additives typically account for about 5-25 wt.%, preferably 5-20 wt.%, of the organic peroxide composition. Preferred additives include stabilizers, such as (but not limited to) one or more antioxidants, for example primary antioxidants, e.g. phenolic types, and/or secondary antioxidants, e.g. phosphite, sulphite types (such as Irganox^{®} 1010 [phenolic; pentaerythritol tetrakis(3-(3,5-di-tert-butyl-4-hydroxyphenyl)propionate)] and/or Irgafos 168 [phosphite; tris(2,4-di-tert-butylphenyl)-phosphite], or a 1:1 blend of both antioxidants which is named Irganox B225 (all of which are available from BASF^{®}).

In a preferred embodiment, the organic peroxide composition in solid form (preferably in the form of compacted solid articles, such as flakes or granules) comprises
a) 40-75 wt.% of at least one organic peroxide of the formula 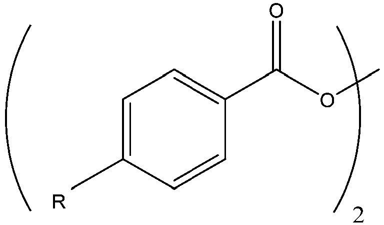 wherein each R is individually selected from C₁₋₅ alkyl groups;
b) 1-30 wt.% of at least one water retaining agent that is a solid at room temperature and meets the requirements of "Protocol A";
c) 5-30 wt.% water; and
d) optionally 5-25 wt.% of at least one antioxidant.

In a more preferred embodiment, the organic peroxide composition in solid form (preferably in the form of compacted solid articles, such as flakes or granules) comprises
a) 40-75 wt.% of at least one organic peroxide of the formula 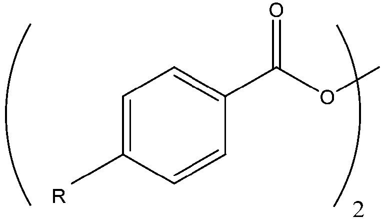 wherein each R is individually selected from C₁₋₅ alkyl groups;
b) 1-30 wt.% of at least one water retaining agent that is a solid at room temperature, selected from anionic clays;
c) 5-30 wt.% water; and
d) optionally 5-25 wt.% of at least one antioxidant, preferably at least one primary antioxidant and/or at least one secondary antioxidant.

In a more preferred embodiment, the organic peroxide composition in solid form (preferably in the form of compacted solid articles, such as flakes or granules) comprises
a) 40-75 wt.% of di(para-methylbenzoyl) peroxide;
b) 1-30 wt.% of at least one water retaining agent that is a solid at room temperature, selected from hydrotalcites;
c) 5-30 wt.% water; and
d) optionally 5-25 wt.% of at least one antioxidant, preferably at least one phenolic-type antioxidant and/or at least one phosphite-type antioxidant or sulphite-type antioxidant.

In a further preferred embodiment, the organic peroxide composition in solid form (preferably in the form of compacted solid articles, such as flakes or granules) comprises
a) 40-75 wt.% of di(para-methylbenzoyl) peroxide;
b) 1-30 wt.% of at least one water retaining agent that is a solid at room temperature, selected from Mg/Al hydrotalcites;
c) 5-30 wt.% water; and
d) 5-25 wt.% of at least one antioxidant, preferably at least one phenolic-type antioxidant and/or at least one phosphite or sulphite type antioxidant.

The organic peroxide composition is added to the polypropylene prior to or during extrusion. The quantity of organic peroxide composition to be used will depend on the desired degree of modification and on the type of polypropylene employed. Preferably, the amount of organic peroxide composition used is such that the concentration of the at least one organic peroxide a) is in the range of 0.1 to 5.0 g of peroxide per 100 g polypropylene, more preferably in the range of 0.5 to 3.0 g per 100 g polypropylene.

The polypropylene can be a homopolymer of propylene or a random, alternating, heterophasic, or block co- or terpolymer of propylene and other olefins. Generally, a propylene copolymer or terpolymer will contain one or more other olefins, such as ethylene, butene, pentene, hexene, heptene, or octene, but it may also comprise styrene or styrene derivatives. The content of olefins other than propylene is preferably not more than 30 wt% of all monomers.

Polypropylene homopolymers and copolymers of propylene and ethylene are most preferred. It is also possible to use mixtures of polypropylene and polyethylene, such as polyolefins recycle streams.

The melting point of commercially available propylene homopolymer is about 160-170°C. The melting point of propylene copolymers and terpolymers is generally lower.

The molecular weight of the polypropylene used can be selected from a wide range. Indicative of the molecular weight is the melt flow index (MFI). Use may be made of a polypropylene having a MFI from 0.1 to 1000 g/10 min (230°C, 21.6 N). Preferably, use is made of a polypropylene having a MFI from 0.5 to 250 g/10 min.

The polypropylene may be a branched polypropylene, such as described in WO 2016/126429 and WO 2016/126430.

Extrusion allows modification of the polypropylene to be combined with pelletization. Use is made of a single screw extruder or a twin screw extruder. Twin screw extruders are preferred because they more thoroughly homogenize the peroxide within the polypropylene. The extruder may be a smooth barrel extruder or it may be a grooved barrel extruder. The residence time in the extruder is generally about 10 seconds to about 5 minutes. The screw speed of the extruder is preferably in the range 25-1000 rpm.

The process can be carried out as a batch process, a continuous process, or a combination thereof. A continuous process is preferred.

During extrusion, vacuum or atmospheric degassing may be applied in order to remove volatile decomposition products and any water introduced as part of the peroxide formulation.

During extrusion, the internal pressure of the extruder is maintained at 500 bar or less, preferably 450 bar or less, preferably 400 bar or less, preferably in the range of from about 1 to about 250 bar, such as from about 2 to about 200 bar or about 50 to about 150 bar, such as from about 50 to about 150 bar. Any suitable means for maintaining the internal pressure within this range may be used, such as, but not limited to, variable speed motor drives for modulating screw RPM, positive-displacement melt pumps or gear pumps for constant-volume delivery, integrated pressure transducers coupled with closed-loop feedback controllers, automated thermal management systems for adjusting melt viscosity, mechanical flow-restriction devices such as adjustable breaker plates or variable-density screen packs, etc.

Extrusion may be conducted in the presence of a co-agent in order to influence the melt flow index of the polypropylene and/or to enhance the degree of modification. Examples of coagents are TMAIC (trimethallyl isocyanurate), TAIC (triallyl isocyanurate), TAC (triallycyanurate), TRIM (trimethylol propane trimethacrylate), divinylbenzene, HVA-2 (N,N'-phenylene bismaleimide), AMSD (alpha methyl styrene dimer), and Perkalink 900 (1,3-bis(citraconimidomethyl)benzene).

A co-agent is generally understood to be a polyfunctional reactive additive such as a polyunsaturated compound which will react rapidly with polymer radicals, will overcome steric hindrance and minimize undesirable side reactions. The incorporation of an effective amount of one or more of these co-agents into the polypropylene, prior to or during the process of the present invention tends to influence the melt flow index and molecular weight of the resulting polypropylene.

If so desired, conventional adjuvants, in an amount known to one skilled in the art, such as antioxidants, UV-stabilizers, lubricants, antidegradants, foaming agents, nucleating agents, fillers, pigments, acid catchers (e.g. calcium stearate), and/or antistatic agents may be added to the polypropylene. These adjuvants can be added to the polypropylene before as well as during or after extrusion. For example, a chemical blowing agent (e.g. azodicarbonamide) can be added or a physical blowing agent (e.g. a gas like nitrogen, carbon dioxide, butane, or isobutane) can be injected into an extruder in order to produce foamed polypropylene. A chemical blowing agent is preferably added before or after extrusion; a physical blowing agent is preferably injected during or after the extrusion.

The HMS-PP may be further processed as known to one of ordinary skill in the art. It may be formed directly into a desired end product, it may be processed using an underwater pelletizer, or it may be purified, modified, moulded, or blended with miscible amounts of other (polymer) materials, such as EPM, EPDM, and/or LDPE. Thus, there may be modifications using another polymer or monomer in order to enhance the end product's compatibility with other materials.

Alternatively, the HMS-PP may be degraded to increase its processability and/or applicability or may be further processed by, for example, foaming, foam moulding, injection moulding, blow moulding, extrusion coating, profile extrusion, cast film extrusion, blown film extrusion, and/or thermoforming.

It is noted that various elements of the present invention, including but not limited to preferred ranges for the various parameters, can be combined unless they are mutually exclusive.

### Worked Examples

The invention will be elucidated by the following examples without being limited thereto or thereby.

### Equipment and materials

All experiments were performed on a Coperion W&P ZSK30 twin-screw extruder (Length:Diameter [L/D] ratio of 36:1), which consists of six heating zones with vacuum degassing (-0.95 bar) at the end of zone 4 using an oil-free dry scroll vacuum pump.

Standard temperature settings [comparative] (hopper-zone 1-zone 2-zone 3-zone 4-zone 5-die): 20°C-190°C-190°C-200°C-210°C-210°C.

Low temperature settings [inventive] (hopper-zone 1-zone 2-zone 3-zone 4-zone 5-die): 20°C-120°C-140°C-160°C-190°C-200°C-210 °C.

The extruder screw speed was kept constant at 300 rpm.

The extruder internal pressure was maintained at around 3-12 bar.

Residence time within the extruder: 1 minute and 12 seconds for the standard screw [comparative] (10 kg/h), and 54 seconds (10 kg/h) or 38 seconds (20 kg/h) for the optimized screw [inventive].

The virgin polypropylene (PP) grade used during the experiments was LyondellBasell Moplen HP500N (batch DE3162J68), with starting MFI 15 (10 kg/h) or MFI 13 (20 kg/h). The organic peroxide granules used during the experiments was prepared in accordance with Example 7 of EP4421118.

The organic peroxide granules were dosed to the extruder using a Plasticolor 1500 feeder and a proper dosing slide into an open (vibrating) vessel - along with PP (Ktron feeder) - under air atmosphere. 1.8 wt.% of the organic peroxide granules was used, unless mentioned otherwise (granules comprised 55% peroxide, so wt.% peroxide was 1.0% %).

The extruded strands obtained from the extruder were pulled through a cold water bath, and granulated straight after. After 3 kg of rinsing, the granulated compounds were collected and dried in a circulation oven at 60 °C for at least 16 hours, but preferably 24 hours.

### Extruder Screw Configurations

Each extruder screw in the twin-screw extruder was an assembly of 48 individual screw elements detachably mounted on a screw rod. The screw configuration was easily changed per the following protocol:
After rinsing the extruder with virgin polypropylene (PP) and disassembling the die, the screws can be detached and pulled out. Once most of the PP is brushed off, all screw elements can be removed from the screw rod (while hot), after which they are burned inside a muffle furnace at 500 °C for one hour (*if the screw elements are (still) coated with a protective layer, it is best to not use a muffle furnace, but instead clean the elements in an oil bath with organic oil (Marlotherm SH) at 250°C for 4 hours, then clean the cooled and greasy elements afterwards with xylene and acetone*). Once the elements have cooled down, the leftover ashes and rust is brushed off with a brass brush (inside and out), the screw rods are lubricated with sealant and then the elements can be repositioned onto the rods in their new configuration. Finally, the reconfigured screws are repositioned and fastened within the extruder, the die is mounted on and the extruder is operable again.

The standard ("Std."; *comparative*) and improved ("Imp."; *inventive*) screw configurations used in the following examples are set out in the below table (i*mproved extruder screw configuration shaded in grey*).

| Element type | | Element length (mm) | | Screw length (mm) | | Heating zone | Temperature (°C) | |
|---|---|---|---|---|---|---|---|---|
| **Standard** | **Improved** | **Std.** | **Imp.** | **Std.** | **Imp.** | | **Std.** | **Imp** |
| 14/14 | 14/14 | 14 | 14 | 14 | 14 | Inlet* | 20 | 20 |
| 42/42 SK | 42/42 SK | 42 | 42 | 56 | 56 | Inlet* | 20 | 20 |
| 42/42 SK | 42/42 SK | 42 | 42 | 98 | 98 | Inlet* | 20 | 20 |
| 42/21 SK | 42/21 SK | 21 | 21 | 119 | 119 | 1 | 160 | 120 |
| 28/28 | 28/28 | 28 | 28 | 147 | 147 | 1 | 160 | 120 |
| 20/10 | 28/28 | 10 | 28 | 157 | 175 | 1 | 160 | 120 |
| 20/20 | 28/28 | 20 | 28 | 177 | 203 | 1 | 160 | 120 |
| KB/45°/5/28 | 28/28 | 28 | 28 | 205 | 231 | 1 | 160 | 120 |
| KB/45°/5/28 | 28/28 | 28 | 28 | 233 | 259 | 1 | 160 | 120 |
| KB/45°/5/28 | 28/28 | 28 | 28 | 261 | 287 | 1 | 160 | 120 |
| KB/90°/5/28 | 28/28 | 28 | 28 | 289 | 315 | 1 | 160 | 120 |
| 20/10L | 28/28 | 10 | 28 | 299 | 343 | 1 | 160 | 120 |
| 28/28 | 28/28 | 28 | 28 | 327 | 371 | 1 | 160 | 120 |
| 28/28 | 28/28 | 28 | 28 | 355 | 399 | 1 | 160 | 120 |
| 28/28 | 28/28 | 28 | 28 | 383 | 427 | 2 | 190 | 140 |
| 28/28 | 28/28 | 28 | 28 | 411 | 455 | 2 | 190 | 140 |
| 28/28 | 20/10 | 28 | 10 | 439 | 465 | 2 | 190 | 140 |
| 28/28 | 20/20 | 28 | 20 | 467 | 485 | 2 | 190 | 140 |
| 28/28 | KB/45°/5/28 | 28 | 28 | 495 | 513 | 2 | 190 | 140 |
| 28/28 | KB/45°/5/28 | 28 | 28 | 523 | 541 | 2 | 190 | 140 |
| 28/28 | KB/45°/5/28 | 28 | 28 | 551 | 569 | 2 | 190 | 140 |
| 28/28 | KB/90°/5/28 | 28 | 28 | 579 | 597 | 3 | 190 | 160 |
| 28/28 | 20/10 | 28 | 10 | 607 | 607 | 3 | 190 | 160 |
| 20/20 | 20/20 | 20 | 20 | 627 | 627 | 3 | 190 | 160 |
| 20/20 | 20/20 | 20 | 20 | 647 | 647 | 3 | 190 | 160 |
| 20/20 | 20/20 | 20 | 20 | 667 | 667 | 3 | 190 | 160 |
| 20/20 | 20/20 | 20 | 20 | 687 | 687 | 3 | 190 | 160 |
| 20/20 | 20/20 | 20 | 20 | 707 | 707 | 3 | 190 | 160 |
| 20/20 | 20/20 | 20 | 20 | 727 | 727 | 3 | 190 | 160 |
| 20/20 | 20/20 | 20 | 20 | 747 | 747 | 3 | 190 | 160 |
| 20/20 | 20/20 | 20 | 20 | 767 | 767 | 4 | 200 | 190 |
| 20/20 | 20/20 | 20 | 20 | 787 | 787 | 4 | 200 | 190 |
| KB/45°/5/28 | KB/45°/5/28 | 28 | 28 | 815 | 815 | 4 | 200 | 190 |
| KB/90°/5/28 | KB/90°/5/28 | 28 | 28 | 843 | 843 | 4 | 200 | 190 |
| 20/10L | 20/10 L | 10 | 10 | 853 | 853 | 4 | 200 | 190 |
| 42/42 | 42/42 | 42 | 42 | 895 | 895 | 4 | 200 | 190 |
| 42/42 | 42/42 | 42 | 42 | 937 | 937 | 5 | 210 | 200 |
| 42/21 | 42/21 | 21 | 21 | 958 | 958 | 5 | 210 | 200 |
| 28/28 | 28/28 | 28 | 28 | 986 | 986 | 5 | 210 | 200 |
| 28/14 | 28/14 | 14 | 14 | 1000 | 1000 | 5 | 210 | 200 |
| 20/10 | 20/10 | 10 | 10 | 1010 | 1010 | 5 | 210 | 200 |
| 20/20 | 20/20 | 20 | 20 | 1030 | 1030 | 5 | 210 | 200 |
| 20/20 | 20/20 | 20 | 20 | 1050 | 1050 | 5 | 210 | 200 |
| 20/20 | 20/20 | 20 | 20 | 1070 | 1070 | 5 | 210 | 200 |
| 20/20 | 20/20 | 20 | 20 | 1090 | 1090 | 5 | 210 | 200 |
| 20/20 | 20/20 | 20 | 20 | 1110 | 1110 | 5 | 210 | 200 |
| 20/20 | 20/20 | 20 | 20 | 1130 | 1130 | 5 | 210 | 200 |
| 20/20 | 20/20 | 20 | 20 | 1150 | 1150 | 5 | 210 | 200 |
| | | | | | | 6-die | 210 | 210 |

| | | | | | | | | |
|---|---|---|---|---|---|---|---|---|
| **The inlet zone is not a heating zone and was water-cooled to a temperature of 20°C* | | | | | | | | |

The following standard extruder element types were employed (each extruder element type is well-known in the technical field and for that reason will not be explained in greater detail herein):
- 14/14 = conveyor screw element
- 42/42 SK = conveyor screw element
- 42/21 SK = conveyor screw element
- 42/42 = conveyor screw element
- 42/21 = conveyor screw element
- 28/28 = conveyor screw element
- 28/14 = conveyor screw element
- 20/20 = conveyor screw element
- 20/10 = conveyor screw element
- KB/45°/5/28 = kneading screw element
- KB/90°/5/28 = kneading screw element
- 20/10L = reverse screw element

The key configurational changes made to the standard screw configuration in arriving at the improved screw configuration are:
1. The feeding section is elongated by 11x 28/28 standard screw elements, so the first mixing section (kneading screw elements) is pushed forward from temperature zone 1 to the end of 2; and
2. The reverse-feed screw element (20/10L) after the first mixing section (kneading screw elements) is replaced by a right-handed screw element (20/10).

By extending the feeding zone as well as removing the reverse-feed screw element at the first mixing zone, the residence time of the PP within the extruder could be reduced, thereby allowing for a higher throughput to be reached whilst the minimizing PP degradation. In addition, since the first mixing block is positioned further downstream in the extruder, a lower temperature profile can be used, which allows for the PP and the peroxide to be mixed and melted more gradually, thereby preventing the peroxide from decomposing too early and quickly at the start and enabling a more effective PP modification.

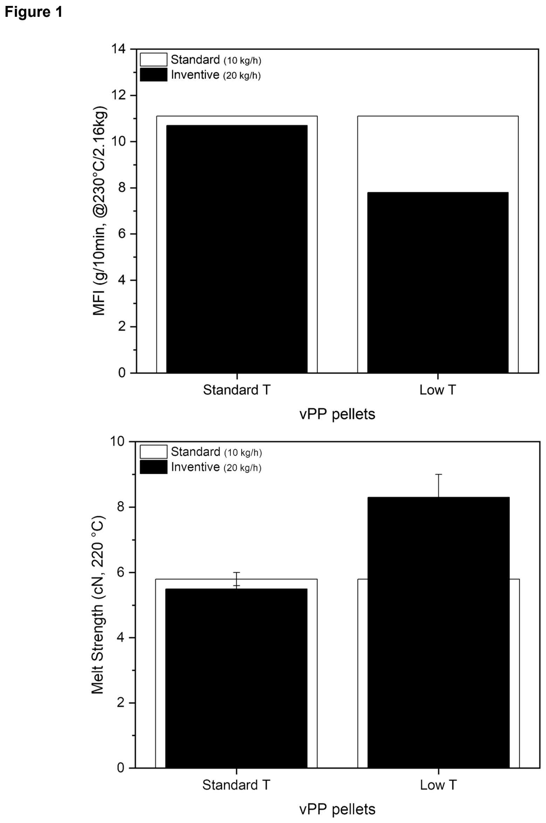

The results of reducing the residence time and temperature profile can be observed in Figure 1. At reduced residence time with the improved screw configuration but standard temperature settings ("Standard T"; temperature in heating zone 1 = 160°C), the melt strength (MS) and melt flow index (MFI) was substantially the same as an equivalent run on the standard configuration at the standard residence time. Thus, substantially the same outcome could be obtained at much higher output with the improved screw configuration. However, at reduced residence time and low temperature settings ("Low T"; temperature in heating zone 1 = 120°C), a substantial improvement in both melt strength (increase) and melt flow index (reduction) was also observed vs the standard conditions on the standard screw configuration, both of which taken together is indicative of a more long-chain branched structure. As such, the improved screw configuration provides for much higher output of a much improved polypropylene product. For completeness, attempting the low temperature settings (temperature in heating zone 1 = 120°C) on the standard screw configuration would cause the extruder to shut down (excessive torque triggering a safety shutdown), hence it is not possible to provide comparative data in that respect.

To achieve comparable MFI and MS on the standard configuration, it was found that the amount of peroxide granules had to be increased from 1.8 wt.% to 2.5 wt.%:

| **Screw Design** | **% peroxide** | **Temp Profile** | **Throughput (kg/h)** | **MFI (g/10min, 230°C/2.16kg)** | **MS (cN, 220°C)** |
|---|---|---|---|---|---|
| Standard | 2.5 | Standard | 10 | 7.7 | 8.8 (±0.2) |
| Inventive | 1.8 | Low | 20 | 7.8 | 8.3 (±0.7) |

The improved screw configuration in combination with the low temperature profile therefore provided the following benefits:
- Lower peroxide usage (30% lower peroxide consumption)
- Lower temperature profile (lower energy consumption)
- Higher throughput (2x output; lower overall energy consumption)

Taken together, the improved screw configuration and lower temperature profile makes the entire process much "greener" (lower consumption of materials and energy) and therefore much more cost efficient than the standard screw configuration. All of these factors are particularly important in polypropylene recycling.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. An extruder for extruding a composition comprising polypropylene and an organic peroxide, the extruder comprising:
- a housing having a first end and a second end longitudinally opposite the first end, the housing having an inlet hopper proximate the first end, an outlet die at the second end, and an inlet zone within the housing, the inlet zone extending from the first end of the housing,
- at least one extruder screw disposed within the housing, the at least one extruder screw having a length extending from the first end of the housing and configured to convey the composition from the inlet to the outlet die, and
- a plurality of heating devices configured to generate a plurality of heating zones within the housing between the first end and the second end,
wherein a first heating device is disposed adjacent to the inlet hopper and is configured to generate a first heating zone adjacent to the inlet zone, the first heating zone having a first temperature within the range of from about 110°C to less than 160°C,
wherein the inlet zone and the first heating zone together extend from the first end of the housing to between 25-45% of the length of the at least one extruder screw,
wherein said at least one extruder screw does not comprise a reverse screw element within the inlet zone and the first heating zone, and
wherein the extruder is configured to have maximum internal pressure of 500 bar or less.

2. The extruder of claim 1, wherein the first temperature of the first heating zone is within the range of from about 115°C to about 150°C.

3. The extruder of claims 1 or 2, further comprising:
a second heating device disposed downstream of the first heating device, the second heating device being configured to generate a second heating zone adjacent to and downstream of the first heating zone and having a second temperature greater than the first temperature, preferably 5-40°C greater than the first temperature,
a third heating device disposed downstream of the second heating device, the third heating device being configured to generate a third heating zone adjacent to and downstream of the second heating zone and having a third temperature greater than the second temperature, preferably 5-40°C greater than the second temperature,
a fourth heating device disposed downstream of the third heating device, the fourth heating device being configured to generate a fourth heating zone adjacent to and downstream of the third heating zone and having a fourth temperature greater than the third temperature, preferably 5-40°C greater than the third temperature, and
a fifth heating device disposed adjacent to and downstream of the fourth heating device, the fifth heating device being configured to generate a fifth heating zone adjacent to and downstream of the fourth heating zone and having a fifth temperature greater than the fourth temperature, preferably 5-40°C greater than the fourth temperature.

4. The extruder of claim 3, wherein the inlet zone, the first heating zone, the second heating zone, and the third heating zone together extend from the first end of the housing to between 60-75% of the length of the at least one extruder screw, and wherein said at least one extruder screw does not comprise a reverse screw element within the inlet zone, the first heating zone, the second heating zone, and the third heating zone.

5. The extruder of claims 3 or 4, wherein the at least one extruder screw does not comprises a kneading screw element in the inlet zone and the first heating zone.

6. The extruder of any one of claims 3-5, wherein the at least one extruder screw comprises at least one kneading screw element in the second heating zone and/or comprises at least one reverse-feed screw element within the fourth heating zone.

7. The extruder of any one of the preceding claims, wherein the outlet die comprises a heating device configured to heat the outlet die to a temperature equal to or greater than the temperature of the heating zone directly upstream of the outlet die.

8. The extruder of any one of the preceding claims, wherein the at least one extruder screw comprises an assembly of individual screw elements detachably mounted on a screw rod.

9. The extruder of any one of the preceding claims, wherein the extruder is a single screw extruder comprising one extruder screw or a twin-screw extruder comprising two extruder screws.

10. The extruder of any one of the preceding claims, further comprising an extruder degassing system in fluid communication with the housing, the extruder degassing system comprising at least one vacuum pump.

11. A process for extruding polypropylene comprising:
a. feeding a polypropylene composition and an organic peroxide to an inlet zone of an extruder according to any one of claims 1-10,
b. conveying and melting the composition in a first heating zone directly adjacent to the inlet zone, the first heating zone having a first temperature of from about 110°C to less than 160°C;
c. mixing the composition in one or more heating zones downstream of said first heating zone; and
d. obtaining an extruded polypropylene product from the outlet of the extruder
wherein the extruder has a maximum internal pressure of 500 bar or less.

12. The process of claim 11, wherein step c. comprises:
c-i. mixing the composition in a second heating zone adjacent to and downstream of the first heating zone, the second heating zone having a second temperature greater than the first temperature, preferably 10-40°C greater than the first temperature,
c-ii. mixing the composition in a third heating zone adjacent to and downstream of the second heating zone, the third heating zone having a third temperature greater than the second temperature, preferably 10-40°C greater than the second temperature,
c-iii. mixing the composition in a fourth heating zone adjacent to and downstream of the third heating zone, the fourth heating zone having a fourth temperature greater than the third temperature, preferably 10-40°C greater than the third temperature, and
c-iv. mixing the composition in a fifth heating zone adjacent to and downstream of the fourth heating zone, the fifth heating zone having a fifth temperature greater than the fourth temperature, preferably 10-40°C greater than the fourth temperature.

13. The process of claims 11 or 12, wherein the organic peroxide is at least one organic peroxide of the formula (I) 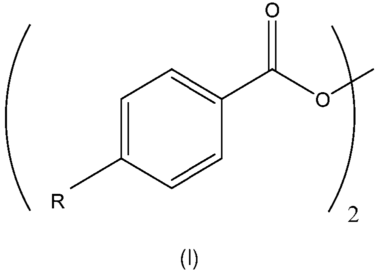 wherein each R is individually selected from C₁₋₅ alkyl groups, preferably wherein each R is individually selected from methyl, ethyl, n-propyl, i-propyl, n-butyl, sec-butyl, tert-butyl, and tert-amyl, most preferably wherein each R is methyl.

14. The process of any one of claims 11-13, wherein the organic peroxide is an organic peroxide composition in solid form, the organic peroxide composition comprising:
a) an organic peroxide of formula (I),
b) at least one water retaining agent that is a solid at room temperature, and
c) water.

15. The process of claim 14, wherein the organic peroxide composition further comprises one or more stabilizers, wherein the one or more stabilizers preferably comprises or consists of one or more antioxidants.
